# EUROPEAN PATENT APPLICATION

(11) **EP 3 104 108 A1**
(43) Date of publication of application: **14.12.2016**
(21) Application number: 15745868.8
(22) Date of filing: 15.01.2015
(51) Int. Cl.: F28D 20/00, F01N 3/24

(54) **CHEMICAL THERMAL STORAGE DEVICE**

(30) Priority: 05.02.2014 JP 2014020363; 12.05.2014 JP 2014098848
(71) Applicant: Kabushiki Kaisha Toyota Jidoshokki, Kariya-shi, Aichi 448-8671 (JP)
(72) Inventor: NOGUCHI Yukihiro, Kariya-shi Aichi 448-8671 (JP); KAWAUCHI Hiroyasu, Kariya-shi Aichi 448-8671 (JP); MURASAKI Takanori, Kariya-shi Aichi 448-8671 (JP); MORI Kenji, Kariya-shi Aichi 448-8671 (JP); SATAKE Yasushi, Kariya-shi Aichi 448-8671 (JP); HARIU Satoshi, Kariya-shi Aichi 4488671 (JP); YAMASAKI Takafumi, Kariya-shi Aichi 448-8671 (JP); UMEMURA Satoshi, Kariya-shi Aichi 448-8671 (JP)
(74) Representative: TBK
(86) International application number: PCT/JP2015/050953
(87) International publication number: WO 2015/118921

(57) **Abstract**

A chemical thermal storage device 10 comprises: a reactor 11 that is disposed around a heat exchanger 4 and contains a thermal storage material 13 that generates heat upon chemical reaction with NH₃ and desorbs NH₃ upon reception of waste heat; an adsorber 12 containing an adsorption material 14 capable of retention and desorption of NH₃ through physical adsorption; a solenoid valve 16 that is provided between the reactor 11 and the adsorber 12 and opens and closes a flow channel between both; and a safety valve 18 that is provided in parallel to the solenoid valve 16 between the reactor 11 and the adsorber 12 and mechanically opens when a pressure in the reactor 11 reaches a preset valve-opening setting pressure. The safety valve 18 has a check valve function to shut off a flow of NH₃ from the adsorber 12 to the reactor 11.

## Description

### Technical Field

The present invention relates to a chemical thermal storage device which heats a heating object, for example, provided in an exhaust system of an engine or the like.

### Background Art

As a conventional chemical thermal storage device, as disclosed in Patent Literature 1 by way of example, there is known a non-recovery type heating device which heats engine elemental components. A chemical thermal storage device disclosed in Patent Literature 1 includes an ammonia adsorber having an ammonia adsorption material capable of fixation and desorption of ammonia (NH₃) as a chemical reaction medium, a chemical thermal storage reactor that is connected to the ammonia adsorber via a pipe and has a chemical thermal storage material that generates heat upon chemical reaction with NH₃ and desorbs NH₃ with excess heat from a heat source, and an opening and closing valve provided on the pipe.

In starting the engine, by releasing the opening and closing valve, NH₃ desorbed from the ammonia adsorption material of the ammonia adsorber is supplied to the chemical thermal storage reactor via the pipe. Then, the chemical thermal storage material generates heat through chemical reaction between NH₃ and the chemical thermal storage material, and the engine elemental components are heated by the heat. After the warming up of the engine, NH₃ is desorbed from the chemical thermal storage material with excess heat of the engine elemental components. Then, this NH₃ is fixed again (recovered) into the ammonia adsorption material via the pipe. After that, the opening and closing valve is closed.

### Citation List

### Patent Literature

Patent Literature 1: Japanese Unexamined Patent Application Publication No. 2013-72558

### Summary of Invention

### Technical Problem

However, the following problem is in the aforementioned conventional art. That is, in recovering NH₃, the chemical thermal storage reactor (hereinafter simply a reactor) becomes in a high temperature state. When stopping the engine in this state, the opening and closing valve is closed in the case where the opening and closing valve is a solenoid valve. In such a state, since NH₃ cannot be returned from the reactor to the ammonia adsorber (hereinafter simply an adsorber), the inside of the reactor is filled with NH₃ and the inside of the reactor becomes in an abnormal over-pressurized state. In this stage, in order not to allow the reactor to burst, it is needed to make the rigidity of the reactor sufficiently high, which causes a physical constitution and a weight of the reactor to increase more than needed.

Moreover, in order to cause the chemical thermal storage material of the reactor to generate heat at high temperature, a pressure not less than several atms is needed. Due to this, for the adsorber, rigidity which can be resistant to this pressure is needed. Now, the pressure in the adsorber varies depending on the outside air temperature. Specifically, when the outside air temperature becomes high, the temperature of the adsorber becomes high and the pressure in the adsorber becomes high. Here, in the case where the opening and closing valve is closed, since even when the outside air temperature rises and the adsorber becomes in a high temperature state, NH₃ cannot move from the adsorber to the reactor, the inside of the adsorber is filled with NH₃ and the inside of the adsorber becomes in an abnormal over-pressurized state. Accordingly, when designing the adsorber with the variation of the outside air temperature taken into consideration, it is needed to make the rigidity of the adsorber sufficiently high, which causes a physical constitution and a weight of the adsorber to increase more than needed.

An object of the present invention is to provide a chemical thermal storage device capable of preventing the inside of a reactor or an adsorber from becoming in an abnormal over-pressurized state.

### Solution to Problem

There is provided a chemical thermal storage device according to the present invention which heats a heating object, the device comprising: a reactor having a thermal storage material that generates heat upon chemical reaction with a gaseous reaction medium; an adsorber having an adsorption material that adsorbs the reaction medium; an opening and closing valve that is provided between the reactor and the adsorber, and opens and closes a flow channel between the reactor and the adsorber; and communication part that causes the reactor and the adsorber to communicate with each other when an internal pressure of at least one of the reactor and the adsorber becomes not less than a predetermined value.

In such a chemical thermal storage device according to the present invention, since even in the state where the opening and closing valve provided between the reactor and the adsorber is closed, the reactor and the adsorber communicates with each other when the internal pressure of at least one of the reactor and the adsorber becomes not less than a predetermined value, the reaction medium becomes to move between the reactor and the adsorber. In this way, the inside of the reactor or the adsorber can be prevented from becoming in an abnormal over-pressurized state.

The communication part may also be provided between the reactor and the adsorber, and may also have at least one of a first valve that opens when the internal pressure of the reactor reaches a first valve-opening setting pressure that is preset and a second valve that opens when the internal pressure of the adsorber reaches a second valve-opening setting pressure that is preset. In such a configuration, when the internal pressure of the reactor reaches the first valve-opening setting pressure of the first valve, the first valve opens and the reaction medium becomes to move from the reactor to the adsorber. Moreover, when the internal pressure of the adsorber reaches the second valve-opening setting pressure of the second valve, the second valve opens and the reaction medium becomes to move from the adsorber to the reactor. In this way, even when not using a sensor that detects the internal pressure of the reactor or the adsorber, the inside of the reactor or the adsorber can be securely prevented from becoming in an abnormal over-pressurized state.

In this stage, the first valve may also include a check valve function to shut off a flow of the reaction medium from the adsorber to the reactor, and the second valve may also include a check valve function to shut off a flow of the reaction medium from the reactor to the adsorber. In this case, even when the internal pressure of the adsorber reaches the first valve-opening setting pressure of the first valve, the reaction medium does not move from the adsorber to the reactor. Moreover, even when the internal pressure of the reactor reaches the second valve-opening setting pressure of the second valve, the reaction medium does not move from the reactor to the adsorber.

Moreover, the first valve and the second valve may also be provided between the reactor and the adsorber, and the second valve-opening setting pressure may also be larger than the first valve-opening setting pressure. In this case, the second valve can be suppressed from opening for the reaction medium to move from the adsorber to the reactor in the normal state where the internal pressure of the adsorber is relatively high.

Furthermore, any one of the first valve and the second valve may also constitute one unit along with the opening and closing valve. In this case, since the number of valve units to be used can be a minimum requirement, which is advantageous in view of costs.

Moreover, the communication part may also further have a bypass passage provided in parallel to the opening and closing valve, and at least one of the first valve and the second valve may also be provided on the bypass passage. In this case, structures of the opening and closing valve, the first valve and the second valve become simple.

Moreover, the communication part may also have detector that detects the internal pressure of at least one of the reactor and the adsorber, and controller that performs control so as to open the opening and closing valve when it is detected by the detector that the internal pressure of at least one of the reactor and the adsorber is not less than the predetermined value. In such a configuration, when the internal pressure of the reactor becomes not less than the predetermined value, the opening and closing valve opens and the reaction medium becomes to move from the reactor to the adsorber. Moreover, when the internal pressure of the adsorber becomes not less than the predetermined value, the opening and closing valve opens and the reaction medium becomes to move from the adsorber to the reactor. In this way, while the number of valves to be used is a minimum requirement, the inside of the reactor or the adsorber can be securely prevented from becoming in an abnormal over-pressurized state.

Furthermore, the chemical thermal storage device may also further comprise a relief valve that opens when the internal pressure of at least one of the reactor and the adsorber reaches a predetermined relief setting value. In this case, even when the internal pressure of at least one of the reactor and the adsorber becomes high to an extent to which the communication part cannot handle it, when the internal pressure of at least one of the reactor and the adsorber reaches the relief setting value, the relief valve opens and the reaction medium becomes to be discharged from at least one of the reactor and the adsorber. In this way, the inside of the reactor or the adsorber can be further prevented from becoming in an abnormal over-pressurized state.

In this stage, the heating object may also be provided in an exhaust system of an engine, and the relief valve may also be provided between the exhaust system and at least one of the reactor and the adsorber. In this case, when the internal pressure of at least one of the reactor and the adsorber reaches the relief setting value, the relief valve opens and the reaction medium is to be discharged from at least one of the reactor and the adsorber to the exhaust system.

### Advantageous Effects of Invention

According to the present invention, the inside of the reactor or the adsorber can be prevented from becoming in an abnormal over-pressurized state. Therefore, it is not needed to make a physical constitution and a weight of the reactor or the adsorber larger than needed in order not to allow the reactor or the adsorber to burst, and costs can be downsized.

### Brief Description of Drawings

[Figure 1] Figure 1 is a schematic configuration diagram illustrating an exhaust purification system including a first embodiment of a chemical thermal storage device according to the present invention.
[Figure 2] Figure 2 is a conceptual diagram illustrating operation of the chemical thermal storage device illustrated in Figure 1.
[Figure 3] Figure 3 is a schematic configuration diagram illustrating an exhaust purification system including a second embodiment of the chemical thermal storage device according to the present invention.
[Figure 4] Figure 4 is a conceptual diagram illustrating operation of the chemical thermal storage device illustrated in Figure 3.
[Figure 5] Figure 5 is a schematic configuration diagram illustrating an exhaust purification system including a third embodiment of the chemical thermal storage device according to the present invention.
[Figure 6] Figure 6 is a conceptual diagram illustrating operation of the chemical thermal storage device illustrated in Figure 5.
[Figure 7] Figure 7 is a schematic configuration diagram illustrating an exhaust purification system including a fourth embodiment of the chemical thermal storage device according to the present invention.
[Figure 8] Figure 8 is a conceptual diagram illustrating operation of the chemical thermal storage device illustrated in Figure 7.
[Figure 9] Figure 9 is a schematic configuration diagram illustrating an exhaust purification system including a fifth embodiment of the chemical thermal storage device according to the present invention.
[Figure 10] Figure 10 is a conceptual diagram illustrating operation of the chemical thermal storage device illustrated in Figure 9.
[Figure 11] Figure 11 is a schematic configuration diagram illustrating an exhaust purification system including a sixth embodiment of the chemical thermal storage device according to the present invention.
[Figure 12] Figure 12 is a flowchart illustrating details of solenoid valve control processing procedures executed by the controller illustrated in Figure 11.
[Figure 13] Figure 13 is a conceptual diagram illustrating operation of the chemical thermal storage device illustrated in Figure 11.

### Description of Embodiments

Hereafter, preferable embodiments of a chemical thermal storage device according to the present invention are described in detail with reference to the drawings. Notably, the same or equivalent elements in the drawings are given the same signs and their duplicated description is omitted.

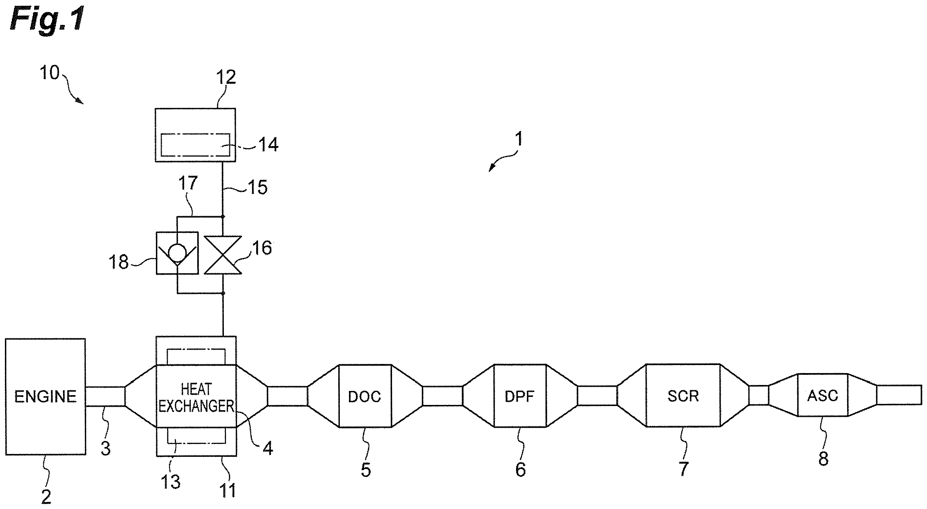

Figure 1 is a schematic configuration diagram illustrating an exhaust purification system including a first embodiment of the chemical thermal storage device according to the present invention. In the figure, an exhaust purification system 1 is provided in an exhaust system of a diesel engine 2 of a vehicle (hereinafter referred to simply as engine 2), and is a system that purifies harmful substances (environmental pollutants) contained in exhaust gas discharged from the engine 2.

The exhaust purification system 1 includes a heat exchanger 4, an oxidation catalyst (DOC: Diesel Oxidation Catalyst) 5, a diesel exhaust particulate removal filter (DPF: Diesel Particulate Filter) 6, a selective reduction catalyst (SCR: Selective Catalytic Reduction) 7 and an oxidation catalyst (ASC: Ammonia Slip Catalyst) 8, which are arranged in the middle of an exhaust passage 3 (exhaust system) connected to the engine 2 sequentially from the upstream side toward the downstream side.

The heat exchanger 4 is a device that performs transfer of heat between the exhaust gas from the engine 2 and a reactor 11 mentioned later, and forms a honeycomb structure. Notably, the heat exchanger 4 can use a known heat exchange structure, which is not limited to the honeycomb structure. The oxidation catalyst 5 is a catalyst that oxidizes HC (hydrocarbon), CO and the like contained in the exhaust gas and purifies the exhaust gas. The DPF 6 is a filter that collects and removes particulate matter (PM: Particulate Matter) contained in the exhaust gas. The SCR 7 is a catalyst that reduces NOₓ contained in the exhaust gas with urea or ammonia (NH₃) and purifies the exhaust gas. The oxidation catalyst 8 is a catalyst that oxidizes NH₃ that has passed through the SCR 7 and flowed to the downstream side of the SCR 7.

Moreover, the exhaust purification system 1 includes the chemical thermal storage device 10 of the present embodiment. The chemical thermal storage device 10 is a device that heats the heat exchanger 4 without energy by normally storing heat of the exhaust gas (waste heat) and using the waste heat when needed. The chemical thermal storage device 10 includes the reactor 11 disposed around the heat exchanger 4 and an adsorber 12 disposed separate from the heat exchanger 4.

The reactor 11 contains a thermal storage material 13 that generates heat for heating the heat exchanger 4 upon chemical reaction with NH₃ which is a gaseous reaction medium and that desorbs NH₃ upon reception of the waste heat. As the thermal storage material 13, a material having a constitution which is MXₐ which is a halide is used. Herein, M is an alkali earth metal such as Mg, Ca and Sr, or a transition metal such as Cr, Mn, Fe, Co, Ni, Cu and Zn. X is a halogen atom such as Cl, Br and I. a is 2 to 3.

The adsorber 12 contains an adsorption material 14 capable of retention and desorption of NH₃ through physical adsorption. As the adsorption material 14, activated carbon, carbon black, mesoporous carbon, nanocarbon or the like is used. In the adsorber 12, NH₃ can be stored by causing the adsorption material 14 to perform physical adsorption of NH₃.

The reactor 11 and the adsorber 12 are connected to each other via a main pipe 15. On the main pipe 15, a solenoid valve 16 which is an opening and closing valve that opens and closes a flow channel between the reactor 11 and the adsorber 12 is provided. The solenoid valve 16 is controlled by a controller (not shown).

To the main pipe 15, a bypass pipe 17 (bypass passage) is connected. On the bypass pipe 17, a mechanical safety valve 18 is provided in parallel to the solenoid valve 16. The safety valve 18 is a separate unit from the solenoid valve 16. The safety valve 18 is a valve (first valve) that mechanically opens when the pressure in the reactor 11 reaches a valve-opening setting pressure (first valve-opening setting pressure). The valve-opening setting pressure is preset with a spring (not shown) provided in the safety valve 18.

The safety valve 18 has a check valve function to shut off a flow of NH₃ from the adsorber 12 to the reactor 11. Accordingly, although when the pressure in the reactor 11 reaches the valve-opening setting pressure, NH₃ moves from the reactor 11 to the adsorber 12 by the safety valve 18 opening, even when the pressure in the adsorber 12 reaches the valve-opening setting pressure, NH₃ does not move from the adsorber 12 to the reactor 11.

Herein, the safety valve 18 constitutes communication part that causes the reactor 11 and the adsorber 12 to communicate with each other when the internal pressure of at least one of the reactor 11 and the adsorber 12 becomes not less than a predetermined value.

In the chemical thermal storage device 10 as above, when the temperature of the exhaust gas from the engine 2 is low, NH₃ is supplied from the adsorber 12 to the reactor 11 via the main pipe 15 by the solenoid valve 16 opening. When the thermal storage material 13 (for example, MgBr₂) of the reactor 11 and NH₃ undergo chemical reaction to result in chemical adsorption (coordinate bonding), heat is generated from the thermal storage material 13. In other words, a reaction (exothermic reaction) from the left side to the right side in the following reaction formula (A) takes place. Then, the heat exchanger 4 is heated by the heat generated in the reactor 11.

MgBr₂+xNH₃ ⇔ Mg(NH₃)ₓBr₂+heat... (A)

On the other hand, when the temperature of the exhaust gas from the engine 2 becomes high, the thermal storage material 13 and NH₃ are separated from each other by waste heat given to the thermal storage material 13 of the reactor 11. In other words, a reaction (regeneration reaction) from the right side to the left side in the above reaction formula (A) takes place. Then, NH₃ desorbed from the thermal storage material 13 returns to the adsorber 12 via the main pipe 15 and undergoes physical adsorption (is recovered) in the adsorption material 14 of the adsorber 12.

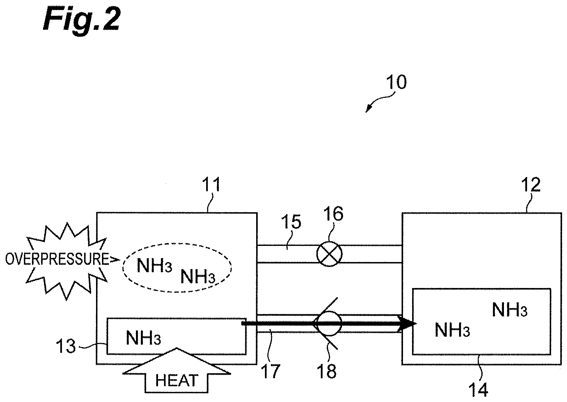

Here, when stopping the engine 2 in recovering NH₃ with waste heat, since electricity becomes not to be supplied to the solenoid valve 16, the solenoid valve 16 closes. Then, as illustrated in Figure 2, the inside of the reactor 11 is filled with high temperature NH₃ gas and the pressure in the reactor 11 steeply rises. In this stage, since when the pressure in the reactor 11 reaches the valve-opening setting pressure of the safety valve 18, the safety valve 18 opens, NH₃ in the reactor 11 becomes to move to the adsorber 12 through the bypass pipe 17. In this way, the inside of the reactor 11 is not abnormally over-pressurized.

As above, according to the present embodiment, even when the pressure in the reactor 11 steeply rises due to the solenoid valve 16 closing in recovering NH₃, since the safety valve 18 operates, the inside of the reactor 11 can be prevented from being abnormally over-pressurized. Accordingly, since it is not needed to make the reactor 11 into an unnecessarily tough structure so as not to allow the reactor 11 to burst, a physical constitution and a weight of the reactor 11 can be suppressed from increasing and costs can be downsized.

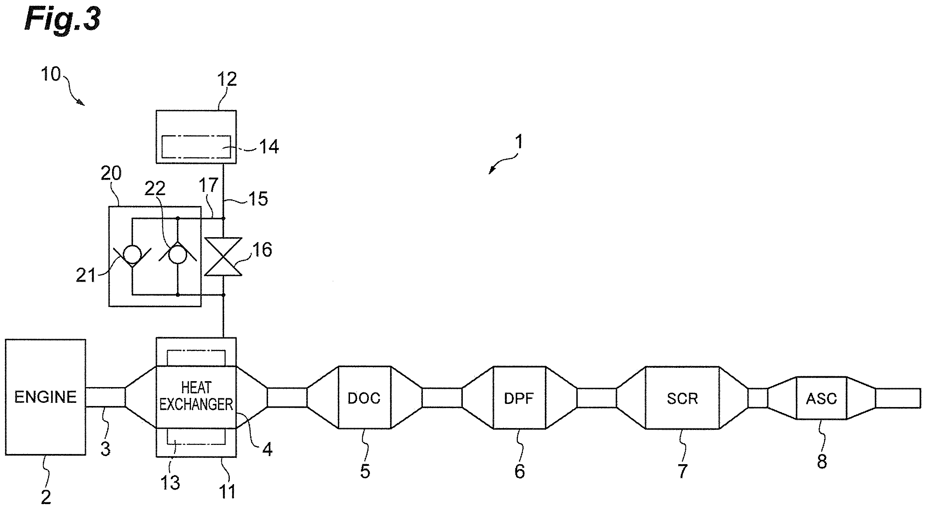

Figure 3 is a schematic configuration diagram illustrating an exhaust purification system including a second embodiment of the chemical thermal storage device according to the present invention. In the figure, the chemical thermal storage device 10 of the present embodiment includes a safety valve unit 20 in place of the safety valve 18 in the aforementioned first embodiment. The safety valve unit 20 has a mechanical safety valve 21 (first valve) and a mechanical safety valve 22 (second valve) that is provided in parallel to this safety valve 21.

The safety valve 21 is a valve (first valve) that mechanically opens when the pressure in the reactor 11 reaches a valve-opening setting pressure for the reactor (first valve-opening setting pressure). The valve-opening setting pressure for the reactor is preset with a spring (not shown) provided in the safety valve 21. The safety valve 21 has a check valve function to shut off a flow of NH₃ from the adsorber 12 to the reactor 11.

The safety valve 22 is a valve (second valve) that mechanically opens when the pressure in the adsorber 12 reaches a valve-opening setting pressure for the adsorber (second valve-opening setting pressure). The valve-opening setting pressure for the adsorber is preset with a spring (not shown) provided in the safety valve 22. The safety valve 22 has a check valve function to shut off a flow of NH₃ from the reactor 11 to the adsorber 12.

In the normal state, the pressure in the adsorber 12 is higher than the pressure in the reactor 11. Due to this, the valve-opening setting pressure, for the adsorber, of the safety valve 22 is set to be higher than the valve-opening setting pressure, for the reactor, of the safety valve 21.

Herein, the safety valves 21 and 22 constitute communication part that causes the reactor 11 and the adsorber 12 to communicate with each other when the internal pressure of at least one of the reactor 11 and the adsorber 12 becomes not less than a predetermined value.

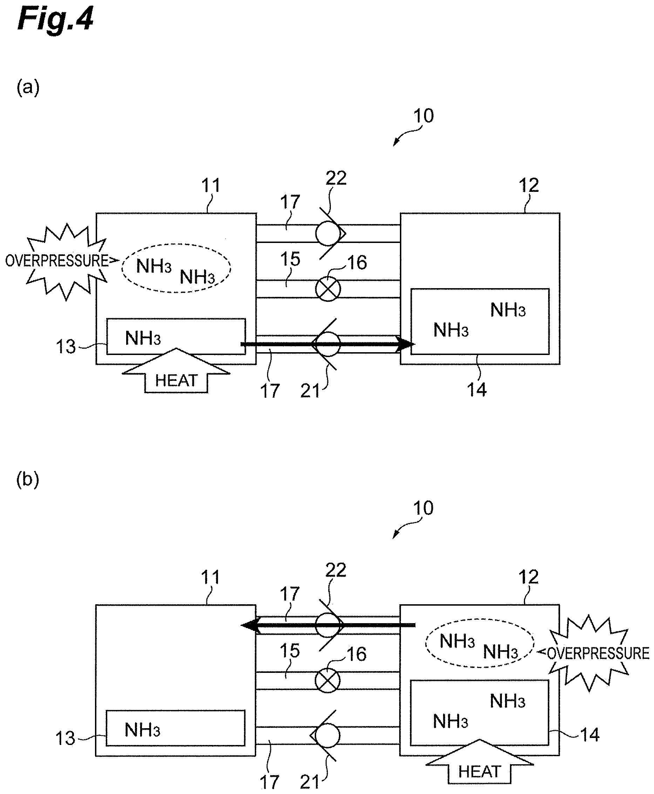

When stopping the engine 2 in recovering NH₃, since the solenoid valve 16 closes as mentioned above, as illustrated in Figure 4(a), the inside of the reactor 11 is filled with high temperature NH₃ gas and the pressure in the reactor 11 steeply rises. In this stage, since when the pressure in the reactor 11 reaches the valve-opening setting pressure, for the reactor, of the safety valve 21, the safety valve 21 opens, NH₃ in the reactor 11 becomes to move to the adsorber 12 through the bypass pipe 17. In this way, the inside of the reactor 11 is not abnormally over-pressurized.

Since when heat is given to the adsorber 12 due to the outside air temperature rising and the adsorber 12 becomes in a high temperature state while the engine 2 is stopped, the solenoid valve 16 is closed, as illustrated in Figure 4(b), the pressure in the adsorber 12 steeply rises with high temperature NH₃ gas in the adsorber 12. In this stage, since when the pressure in the adsorber 12 reaches the valve-opening setting pressure, for the adsorber, of the safety valve 22, the safety valve 22 opens, NH₃ in the adsorber 12 becomes to move to the reactor 11 through the bypass pipe 17. In this way, the inside of the adsorber 12 is not abnormally over-pressurized.

Accordingly, in addition to that it is not needed to make the reactor 11 into an unnecessarily tough structure so as not to allow the reactor 11 to burst, it is not needed to make the adsorber 12 into an unnecessarily tough structure so as not to allow the adsorber 12 to burst. Due to this, physical constitutions and weights of the reactor 11 and the adsorber 12 can be suppressed from increasing and costs can be further downsized.

Moreover, the valve-opening setting pressure, for the adsorber, of the safety valve 22 is higher than the valve-opening setting pressure, for the reactor, of the safety valve 21. Due to this, even when the pressure in the adsorber 12 becomes high, the safety valve 22 does not immediately open and erroneous movement of NH₃ from the adsorber 12 to the reactor 11 can be suppressed from occurring. Moreover, since the valve-opening setting pressure, for the reactor, of the safety valve 21 is lower than the valve-opening setting pressure, for the adsorber, of the safety valve 22, movement of NH₃ from the reactor 11 to the adsorber 12 is facilitated and recovery of NH₃ can be promoted.

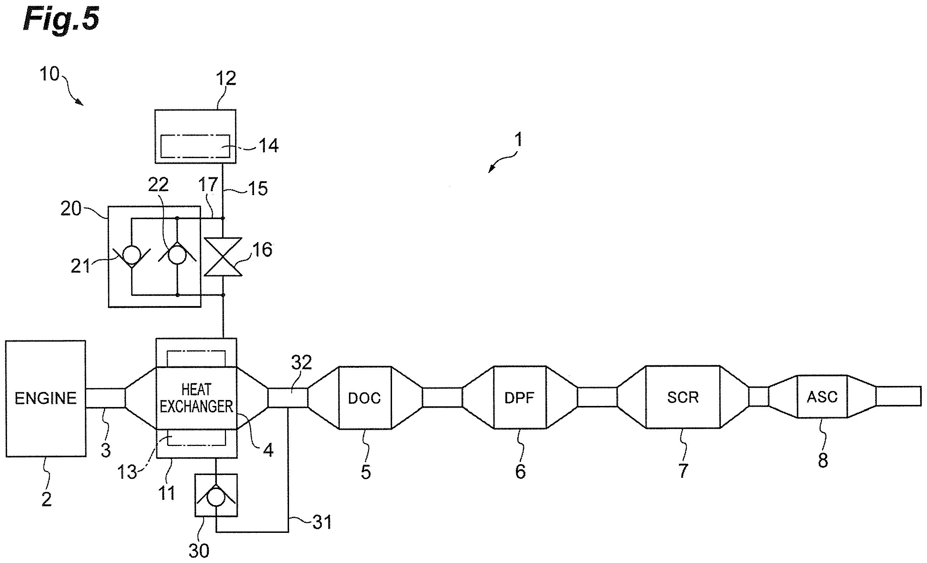

Figure 5 is a schematic configuration diagram illustrating an exhaust purification system including a third embodiment of the chemical thermal storage device according to the present invention. In the figure, the chemical thermal storage device 10 of the present embodiment includes a relief valve 30 in addition to the aforementioned configuration in the second embodiment.

The relief valve 30 is provided on a pipe 31 that connects the reactor 11 and the exhaust passage 3. One end of the pipe 31 is connected to an exhaust pipe 32 that joins the heat exchanger 4 and the oxidation catalyst 5 on the exhaust passage 3.

The relief valve 30 is a valve that mechanically opens when the pressure in the reactor 11 reaches a relief setting value. The relief setting value is preset with a spring (not shown) provided in the relief valve 30. The relief setting value is set to be higher than the valve-opening setting pressure, for the reactor, of the safety valve 21. The relief valve 30 has a check valve function to shut off a flow of gas from the exhaust pipe 32 to the reactor 11.

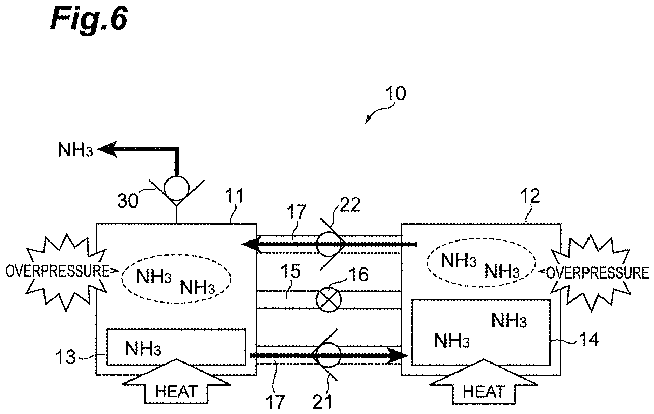

Since when both the reactor 11 and the adsorber 12 becomes in high temperature states while the engine 2 is stopped, the solenoid valve 16 is closed, as illustrated in Figure 6, the pressures in the reactor 11 and the adsorber 12 steeply rise with high temperature NH₃ gas in the reactor 11 and the adsorber 12. In this stage, when the pressure in the reactor 11 reaches the valve-opening setting pressure, for the reactor, of the safety valve 21, the safety valve 21 opens, and when the pressure in the adsorber 12 reaches the valve-opening setting pressure, for the adsorber, of the safety valve 22, the safety valve 22 opens. Nevertheless, the inside of the reactor 11 and the inside of the adsorber 12 are still in the state of being over-pressurized by the NH₃ gas.

Since when the pressure in the reactor 11 reaches the relief setting pressure of the relief valve 30, the relief valve 30 opens, NH₃ in the reactor 11 becomes to be released through the pipe 31 to the exhaust pipe 32 in the previous stage of the oxidation catalyst 5. Then, NH₃ released to the exhaust pipe 32 is oxidized by the oxidation catalyst 5 to be NOₓ.

In this way, even when a situation that cannot be handled with the safety valves 21 and 22 occurs due to each of the pressures in the reactor 11 and the adsorber 12 steeply rising, NH₃ is released from the inside of the reactor 11 to the exhaust pipe 32 by the operation of the relief valve 30. In this way, the inside of the reactor 11 and the inside of the adsorber 12 can be prevented from being abnormally over-pressurized.

Notably, in the present embodiment, while the configuration is made to release NH₃ in the reactor 11 to the exhaust pipe 32 in the previous stage of the oxidation catalyst 5, the release destination of NH₃ is not specially limited to the exhaust pipe 32 but may also be an exhaust pipe in the previous stage of any of the heat exchanger 4, the diesel exhaust particulate removal filter 6, the selective reduction catalyst 7 and the oxidation catalyst 8, or the like.

Moreover, in the present embodiment, while the configuration is made to provide the relief valve 30 which opens when the pressure in the reactor 11 reaches the relief setting value between the reactor 11 and the exhaust passage 3, the configuration may also be made to provide a relief valve that opens when the pressure in the adsorber 12 reaches the relief setting value between the adsorber 12 and the exhaust passage 3, or the configuration may also be made to provide a relief valve that opens when the pressure in the reactor 11 or the adsorber 12 reaches the relief setting value on a passage that joins the reactor 11 and the adsorber 12.

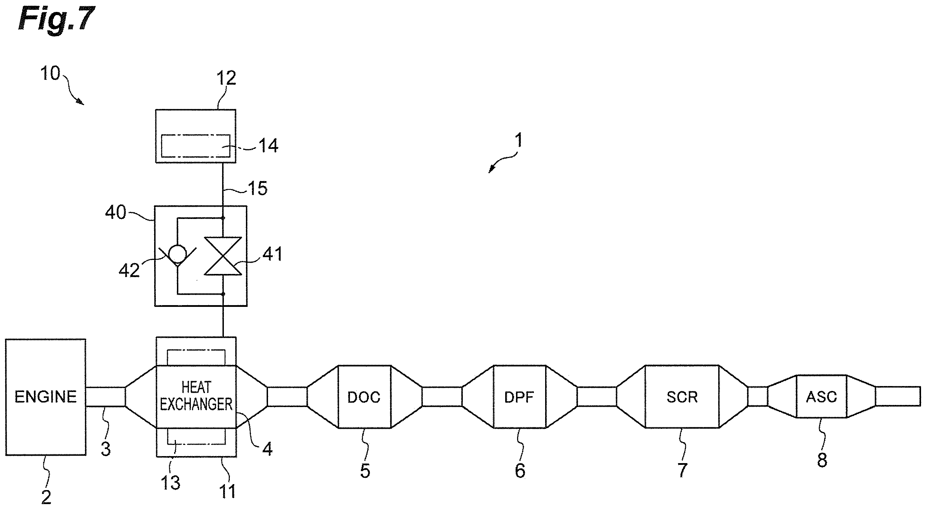

Figure 7 is a schematic configuration diagram illustrating an exhaust purification system including a fourth embodiment of the chemical thermal storage device according to the present invention. In the figure, the chemical thermal storage device 10 of the present embodiment includes a solenoid valve unit 40 in place of the solenoid valve 16 and the safety valve 18 in the aforementioned first embodiment.

The solenoid valve unit 40 includes the check valve 42 with respect to the solenoid valve 41 as an opening and closing valve which is the main part. The solenoid valve 41 and the check valve 42 constitute one unit. In other words, the solenoid valve unit 40 is the solenoid valve 41 equipped with the check valve 42. The solenoid valve unit 40 is controlled by a controller (not shown).

The solenoid valve 41 is a valve that opens and closes the flow channel between the reactor 11 and the adsorber 12. The check valve 42 is a valve (first valve) that mechanically opens when the pressure in the reactor 11 reaches a valve-opening setting pressure (first valve-opening setting pressure) and that shuts off a flow of NH₃ from the adsorber 12 to the reactor 11. The valve-opening setting pressure is preset with a spring (not shown) provided in the solenoid valve unit 40.

Herein, the check valve 42 constitutes communication part that causes the reactor 11 and the adsorber 12 to communicate with each other when the internal pressure of at least one of the reactor 11 and the adsorber 12 becomes not less than a predetermined value.

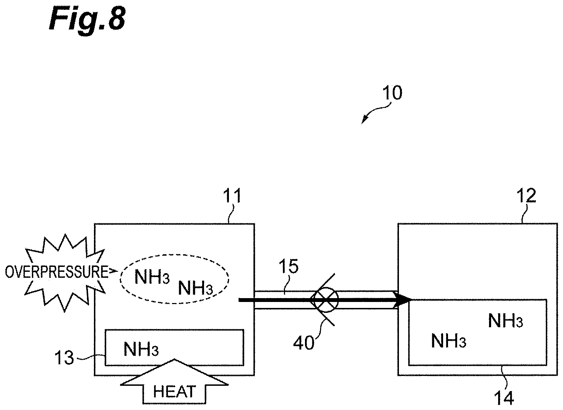

When stopping the engine 2 in recovering NH₃, the solenoid valve unit 40 closes based on operation of the solenoid valve 41. Then, as illustrated in Figure 8, the inside of the reactor 11 is filled with high temperature NH₃ gas and the pressure in the reactor 11 steeply rises. In this stage, since when the pressure in the reactor 11 reaches the valve-opening setting pressure of the solenoid valve unit 40, the solenoid valve unit 40 opens based on operation of the check valve 42, NH₃ in the reactor 11 becomes to move to the adsorber 12 through the main pipe 15. In this way, the over-pressurized state in the reactor 11 can be relieved.

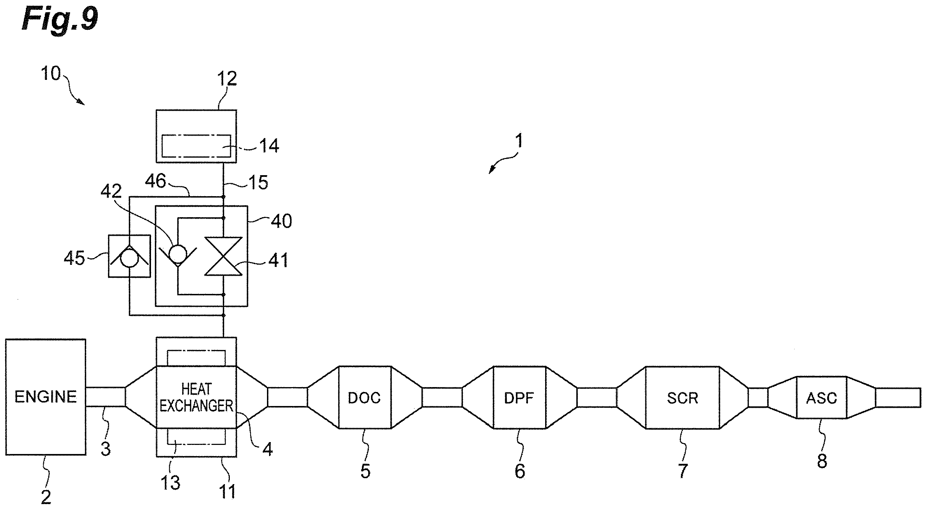

Figure 9 is a schematic configuration diagram illustrating an exhaust purification system including a fifth embodiment of the chemical thermal storage device according to the present invention. In the figure, the chemical thermal storage device 10 of the present embodiment includes a mechanical safety valve 45 in addition to the aforementioned configuration in the fourth embodiment.

The safety valve 45 is provided on a bypass pipe 46 (bypass passage) connected to the main pipe 15 in parallel to the solenoid valve unit 40. The safety valve 45 is a valve (second valve) that mechanically opens when the pressure in the adsorber 12 reaches a valve-opening setting pressure for the adsorber (second valve-opening setting pressure). The valve-opening setting pressure for the adsorber is preset with a spring (not shown) provided in the safety valve 45. The valve-opening setting pressure, for the adsorber, of the safety valve 45 is set to be higher than the valve-opening setting pressure (first valve-opening setting pressure) of the solenoid valve unit 40. Moreover, the safety valve 45 has a check valve function to shut off a flow of NH₃ from the reactor 11 to the adsorber 12.

Herein, the check valve 42 and the safety valve 45 constitute communication part that causes the reactor 11 and the adsorber 12 to communicate with each other when the internal pressure of at least one of the reactor 11 and the adsorber 12 becomes not less than a predetermined value.

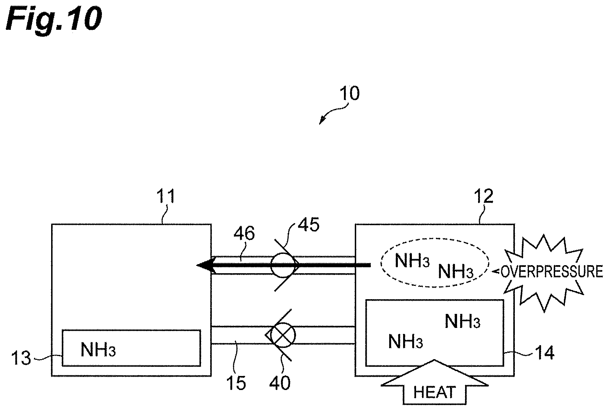

Since when heat is given to the adsorber 12 due to the outside air temperature rising and the adsorber 12 becomes in a high temperature state while the engine 2 is stopped, the solenoid valve unit 40 is closed, as illustrated in Figure 10, the pressure in the adsorber 12 steeply rises with high temperature NH₃ gas in the adsorber 12. In this stage, since when the pressure in the adsorber 12 reaches the valve-opening setting pressure, for the adsorber, of the safety valve 45, the safety valve 45 opens, NH₃ in the adsorber 12 becomes to move to the reactor 11 through the bypass pipe 46. In this way, the over-pressurized state in the adsorber 12 can be relieved.

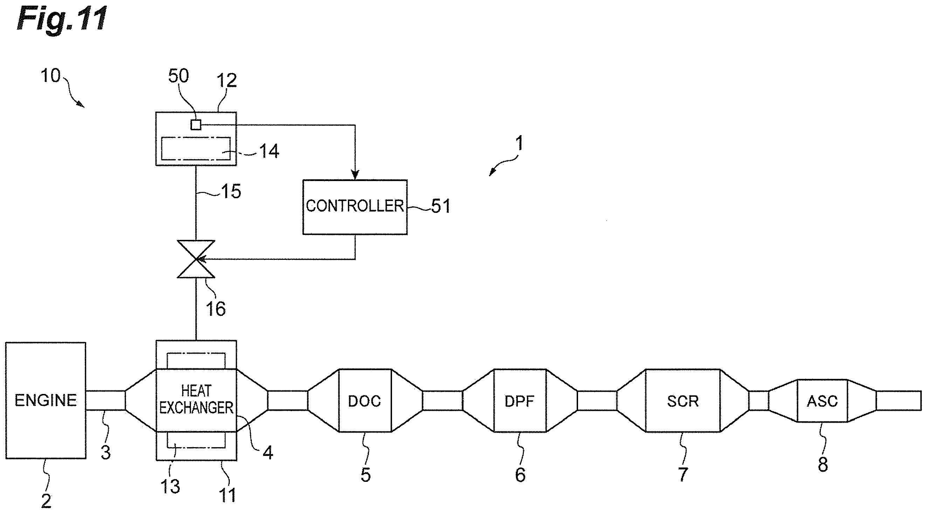

Figure 11 is a schematic configuration diagram illustrating an exhaust purification system including a sixth embodiment of the chemical thermal storage device according to the present invention. In the figure, while the chemical thermal storage device 10 of the present embodiment has the main pipe 15 and the solenoid valve 16 in the aforementioned first embodiment, it does not have the bypass pipe 17 and the safety valve 18 therein.

The chemical thermal storage device 10 includes a pressure sensor 50 (detector) that detects the pressure in the adsorber 12 and a controller 51 (controller) connected to this pressure sensor 50. The controller 51 controls the solenoid valve 16 based on a detection value of the pressure sensor 50.

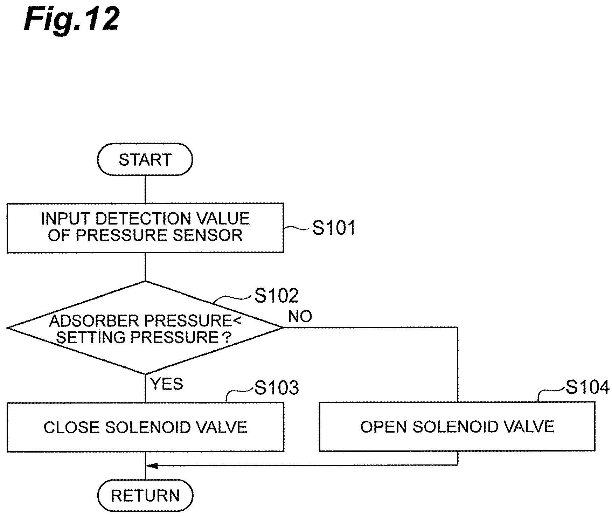

Figure 12 is a flowchart illustrating details of solenoid valve control processing procedures executed by the controller 51. The processing is executed during a period except the occasion of the exothermic reaction and the occasion of the regeneration reaction. Notably, the solenoid valve 16 is in the closed state during the period except the occasion of the exothermic reaction and the occasion of the regeneration reaction.

In Figure 12, first, the detection value of the pressure sensor 50 is inputted (procedure S101) and it is determined whether the pressure, in the adsorber 12, detected by the pressure sensor 50 (adsorber pressure) is lower than a setting pressure (procedure S102). The setting pressure is preset based on an experiment or the like.

When the pressure in the adsorber 12 is lower than the setting pressure, control is performed so as to close the solenoid valve 16 (procedure S103), returning to procedure S101. When the pressure in the adsorber 12 is not less than the setting pressure, control is performed so as to open the solenoid valve 16 (procedure S104), returning to procedure S101.

Herein, the pressure sensor 50 and the controller 51 constitute communication part that causes the reactor 11 and the adsorber 12 to communicate with each other when the internal pressure of at least one of the reactor 11 and the adsorber 12 becomes not less than a predetermined value.

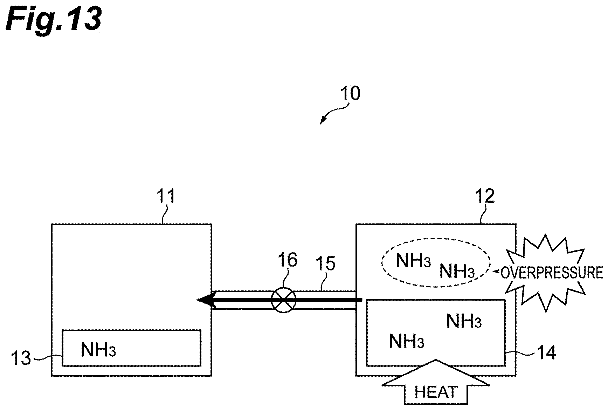

Even in a state where the engine 2 does not stop, the solenoid valve 16 is closed during the period except the occasion of the exothermic reaction and the occasion of the regeneration reaction. Due to this, when heat is given to the adsorber 12 due to the outside air temperature rising and the adsorber 12 becomes in a high temperature state, as illustrated in Figure 13, the pressure in the adsorber 12 steeply rises with high temperature NH₃ gas in the adsorber 12. In this stage, since when the pressure in the adsorber 12 reaches the setting pressure, the solenoid valve 16 opens, NH₃ in the adsorber 12 becomes to move to the reactor 11 through the main pipe 15. In this way, the inside of the adsorber 12 is not abnormally over-pressurized. Accordingly, similarly to the aforementioned second embodiment, since it is not needed to make the rigidity of the adsorber 12 higher than needed, a physical constitution and a weight of the adsorber 12 can be suppressed from increasing.

Notably, in the present embodiment, while control is performed so as to open the solenoid valve 16 when the pressure in the adsorber 12 is not less than the setting pressure, not specially limited to this, a pressure sensor that detects the pressure in the reactor 11 may also be provided and control may also be performed so as to open the solenoid valve 16 when the pressure in the reactor 11 becomes not less than the setting pressure.

Moreover, also in the present embodiment, the relief valve 30 in the aforementioned third embodiment may also be separately included.

As above, some preferred embodiments of the chemical thermal storage device according to the present invention have been described. Nevertheless, the present invention is not limited to the aforementioned embodiments. For example, in the aforementioned first to fifth embodiments, while any one of the safety valve 18, the safety valve 21 and the check valve 42 each of which is the first valve which mechanically opens when the pressure in the reactor 11 reaches the first valve-opening setting pressure is provided, not providing the first valve which opens when the pressure in the reactor 11 reaches the first valve-opening setting pressure, a configuration to provide the second valve which opens when the pressure in the adsorber 12 reaches the second valve-opening setting pressure may also be employed.

Moreover, in the aforementioned second, third and fifth embodiments, while the second valve-opening setting pressure of the second valve is set to be higher than the first valve-opening setting pressure of the first valve, not specially limited to that mode, the second valve-opening setting pressure of the second valve may also be set equal to the first valve-opening setting pressure of the first valve.

Moreover, in the aforementioned embodiments, while NH₃ is used as the gaseous reaction medium which undergoes chemical reaction with the thermal storage material 13 in the reactor 11, not specially limited to NH₃ as the reaction medium, CO₂ or the like may also be used. When CO₂ is used as the reaction medium, examples of the thermal storage material 13 which undergoes chemical reaction with CO₂ include MgO, CaO, BaO, Ca(OH)₂, Mg(OH)₂, Fe(OH)₂, Fe(OH)₃, FeO, Fe₂O₃ and Fe₃O₄.

Furthermore, in the aforementioned embodiments, while the reactor 11 is disposed around the heat exchanger 4, not specially limited to this, the place where the reactor 11 is disposed may also be, for example, the inside of the heat exchanger 4.

Moreover, in the aforementioned embodiments, while the adsorber 12 contains the adsorption material 14 which performs physical adsorption of NH₃, not specially limited to this, the adsorber 12 may also contain an adsorption material that performs chemical adsorption of NH₃.

Furthermore, while the aforementioned embodiments heat the heat exchanger 4 provided in the exhaust system of the diesel engine 2, the present invention can also be applied to one which heats another portion (oxidation catalyst 5 or the like) provided in the exhaust system of the diesel engine 2. Moreover, the present invention can also be applied to one which heats a catalyst or the like provided in an exhaust system of a gasoline engine, or one which heats a heating object other than the exhaust system of the engine.

### Reference Signs List

4 ... Heat exchanger (heating object), 3 ... Exhaust passage (exhaust system), 10 ... Chemical thermal storage device, 11 ... Reactor, 12 ... Adsorber, 13 ... Thermal storage material, 14 ... Adsorption material, 16 ... Solenoid valve (opening and closing valve), 17 ... Bypass pipe (bypass passage), 18 ... Safety valve (first valve; communication part), 21 ... Safety valve (first valve; communication part), 22 ... Safety valve (second valve; communication part), 30 ... Relief valve, 41 ... Solenoid valve (opening and closing valve), 42 ... Check valve (first valve; communication part), 45 ... Safety valve (second valve; communication part), 46 ... Bypass pipe (bypass passage), 50 ... Pressure sensor (detector; communication part), 51 ... Controller (detector; communication part).

## Claims

1. A chemical thermal storage device which heats a heating object, the device comprising:
a reactor having a thermal storage material that generates heat upon chemical reaction with a gaseous reaction medium;
an adsorber having an adsorption material that adsorbs the reaction medium;
an opening and closing valve that is provided between the reactor and the adsorber, and opens and closes a flow channel between the reactor and the adsorber; and
communication part that causes the reactor and the adsorber to communicate with each other when an internal pressure of at least one of the reactor and the adsorber becomes not less than a predetermined value.

2. The chemical thermal storage device according to Claim 1, wherein the communication part is provided between the reactor and the adsorber, and has at least one of a first valve that opens when the internal pressure of the reactor reaches a first valve-opening setting pressure that is preset and a second valve that opens when the internal pressure of the adsorber reaches a second valve-opening setting pressure that is preset.

3. The chemical thermal storage device according to Claim 2, wherein
the first valve includes a check valve function to shut off a flow of the reaction medium from the adsorber to the reactor, and
the second valve includes a check valve function to shut off a flow of the reaction medium from the reactor to the adsorber.

4. The chemical thermal storage device according to Claim 2 or 3, wherein
the first valve and the second valve are provided between the reactor and the adsorber, and
the second valve-opening setting pressure is larger than the first valve-opening setting pressure.

5. The chemical thermal storage device according to any one of Claims 2 to 4, wherein any one of the first valve and the second valve constitutes one unit along with the opening and closing valve.

6. The chemical thermal storage device according to any one of Claims 2 to 4, wherein
the communication part further has a bypass passage provided in parallel to the opening and closing valve, and
at least one of the first valve and the second valve is provided on the bypass passage.

7. The chemical thermal storage device according to Claim 1, wherein the communication part has detector that detects the internal pressure of at least one of the reactor and the adsorber, and controller that performs control so as to open the opening and closing valve when it is detected by the detector that the internal pressure of at least one of the reactor and the adsorber is not less than the predetermined value.

8. The chemical thermal storage device according to any one of Claims 1 to 7, further comprising a relief valve that opens when the internal pressure of at least one of the reactor and the adsorber reaches a preset relief setting value.

9. The chemical thermal storage device according to Claim 8, wherein
the heating object is provided in an exhaust system of an engine, and
the relief valve is provided between the exhaust system and at least one of the reactor and the adsorber.
